# EUROPÄISCHE PATENTSCHRIFT

(11) **EP 0 466 973 B1**
(45) Veröffentlichungstag und Bekanntmachung des Hinweises auf die Patenterteilung: **02.03.1994**
(21) Anmeldenummer: 90123958.2
(22) Anmeldetag: 12.12.1990
(51) Int. Cl.: C02F 3/12

(54) **Verfahren und Anlage zur biologischen Abwasserklärung mittels aerober Schlammstabilisierung, insbesondere unter Verwendung einer Kleinkläranlage**
Process and apparatus for biological clarification of water by aerobic sludge stabilisation, especially in small clarification plants
Procédé et dispositif pour la clarification biologique des eaux usées par la stabilisation aérobie de boues, particulièrement dans les petites installations de clarification

(30) Priorität: 17.07.1990 DE 4022639
(43) Veröffentlichungstag der Anmeldung: 22.01.1992
(73) Patentinhaber: SI-tronik Schäfer GmbH, D-57234 Wilnsdorf (DE)
(72) Erfinder: Schäfer, Gerd, W-5901 Wilnsdorf (DE)
(74) Vertreter: Valentin, Ekkehard, Dipl.-Ing.

(56) Entgegenhaltungen:
- FR-A- 2 365 526
- FR-A- 2 454 428
- JOURNAL OF THE WATER POLLUTION CONTROL FEDERATION. Bd. 59, Nr. 3, März 1987, WASHINGTON US Seiten 132 - 138; R. L. IRVINE ET AL.: 'ANALYSIS OF FULL-SCALE SBR OPERATION AT GRUNDY CENTER, IOWA', *Seite 134, linke Spalte, letzter Absatz; Abbilcung 3*

## Beschreibung

Bei nach biologischen Abbauverfahren arbeitenden Kläranlagen wird üblicherweise zwischen konventionellen Anlagen mit einer Reinigungskapazität für mehr als 500 Einwohner und Kleinkläranlagen für Einzelhäuser, aber auch für Siedlungen bis 500 Einwohner unterschieden. Diese Unterscheidung erfolgt nicht nur im Hinblick auf die unterschiedliche Größenordnung, sondern ebenso auch im Hinblick auf die unterschiedlichen Arbeitsverfahren. Der biologische Teil einer konventionellen Kläranlage arbeitet in drei Stufen:
- In der Vorklärung werden die absetzbaren Stoffe entfernt.
- In der Belebung erfolgt die Anreicherung mit Sauerstoff.
- In der Nachklärung wird die Biomasse vom gereinigten Abwasser getrennt und zur Belebung zurückgeführt.

Belebung und Nachklärung wirken als kontinuierlich arbeitender Fermenter mit Biomassenrückführung.

Das Verfahren und die entsprechenden Anlagen erfordern einen hohen anlagetechnischen und baulichen Aufwand, da drei voneinander getrennte Becken mit den entsprechenden hydraulischen und maschinentechnischen Einrichtungen ausgebaut werden müssen. Weiterhin ist der Überschußschlamm aus Vorklärung und Nachklärung noch nicht stabilisiert und muß entsprechend behandelt werden. Diese Behandlung erfolgt zumeist durch Ausfaulen in sogenannten Faultürmen. Es handelt sich dabei um außerordentlich teure und aufwendige Anlagenteile, die weiterhin auch einen entsprechenden personellen Aufwand zur Aufrechterhaltung eines geordneten Betriebes erfordern. Zur Klärung von häuslichen Abwässern aus Einzelobjekten oder Siedlungen mit weniger als 500 Einwohnerwerten, werden vielfach Kleinkläranlagen eingesetzt.

Als Einwohnerwert wird die je Tag und Einwohner im Abwasser enthaltene Normschmutzmenge bezeichnet. Zu ihrem Abbau wird ein biochemischer Sauerstoffbedarf (BSB 5) von 54 g/Tag benötigt. Das häusliche Abwasser besteht im wesentlichen aus Spül-, Wasch- und Reinigungswasser sowie Abflüssen sanitärer Anlagen. Der Anteil dieser Abflüsse in der Schmutzmenge des häuslichen Abwassers beträgt etwa 45 bis 60%. Man rechnet im Durchschnitt mit einem häuslichen Abwasseranfall in der BRD im Mittel von rund 150 l Wasser/Einwohner und Tag.

Im Gegensatz zu konventionellen Kläranlagen wird bei Kleinkläranlagen das apparativ einfachere und damit kostengünstigere Verfahren der simultanen aeroben Schlammstabilisierung angewandt. Hierbei wird auf eine separate Vorklärung verzichtet und die gesamte Biomasse in die Belebungsstufe eingeleitet. Um bei Kleinkläranlagen eine aerobe Schlammstabilisierung zu gewährleisten, darf die Schlammbelastung einen Wert von 0,05 kg/(kg d) nicht überschreiten, d.h., das Nährstoffangebot für den Belebtschlamm muß relativ niedrig sein. Beim Belebtschlammverfahren wird das im vorgeschalteten Rechen und Sandfang, gegebenenfalls auch Fett- und Ölabscheider vorgereinigte Abwasser mit Frischschlamm geimpft, wodurch der aerobe Abbau organischer Verunreinigungen beschleunigt wird. In der Belebungsstufe wird Luft-Sauerstoff in das zu reinigende Abwasser eingeleitet. Die aeroben Organismen bilden im Belebungsbecken flockenartige, im Abwasser schwebende Kolonien, den sogenannten belebten Schlamm. Dieser wird mit unterschiedlichen hydraulischen und/oder anlagespezifischen Mitteln vom gereinigten Abwasser getrennt und in die Belebtschlammstufe zurückgeführt. Weil der anfallende Belebtschlamm durch intensive Belüftung unter Abbau der im Abwasser vorhandenen organischen Verschmutzungen weitgehend mineralisiert bzw. stabilisiert wird und dann kaum noch fäulnisfähige Stoffe beinhaltet, sind die verbleibenden Schlammengen außerordentlich gering.

Kleinkläranlagen vom Stand der Technik werden üblicherweise kontinuierlich gefahren und besitzen am Auslauf hydraulische und/oder anlagenspezifische Einrichtungen, um Belebtschlamm vom gereinigten Abwasser zu trennen.

In der Dokumentation Journal Water Pollution Control Federation, 59 (1987) March, No. 3 (I), Alexandria, VA, USA werden als Reaktoren ausgebildete Abwasser-Kleinkläranlagen zur Durchführung periodischer Prozesse mit sich schubweise wiederholenden Arbeitszyklen beschrieben. In einem sogenannten Sequencing Batch Reactor (SBR) werden nacheinander die Arbeitsschritte Füllen, Reagieren, Schlammabsetzen, Entleeren, Unterbrechen durchgeführt. Ein anderer periodischer Prozeß, genannt Cycle Extended Aeration System (ICEAS), unterscheidet sich vom SBR-Prozeß dadurch, daß bei einer ähnlichen folge von Arbeitsschritten der Einlauf in das System über alle Perioden kontinuierlich durchgeführt wird. Hierfür besitzt die mit zwei parallelen Belüftungstanks ausgestattete ICEAS-Anlage eine Vorbehandlungsstufe mit Sandfang, Magnetscheider sowie Zerkleinerungseinrichtung, wobei den Belüftungstanks Vorreaktionskammern vorgeschaltet sind. Gereinigtes Abwasser wird beim SBR-Verfahren dicht oberhalb des Schlammsetzpegels abgezogen. Beim ICEAS-System wird am Ende der Periode gereinigtes Wasser dicht unterhalt der Wasseroberfläche mittels schwimmender Schöpftrichter während der Entleerungsperiode abgeführt. Die Verweilzeit (Belüftung und Reaktion) in beiden Systemen betrug ca. 25 Stunden, die Belüftungszeit davon ca. 15%, wobei erkannt wurde, daß sowohl Absetzverhalten als auch Reinigungseffekt wesentlich von der Länge der Reaktionsperiode bestimmt werden und ein Abbau von etwa 80% anorganischem Stickstoff und 50% Phosphor erzielt wurde. Der Sauerstoffübergang betrug durchschnittlich 10%.

Die FR-A-2 365 526 beschreibt ein ebenfalls in einem geschlossenen Reaktor durchgeführtes Abwasser-Klärverfahren mit den Arbeitsschritten Auffüllen, Ingangsetzen einer Belebtschlammbildung, Absetzen, Entleeren, wobei die Erfindung darin besteht, gereinigtes Abwasser mit einer von schwimmenden Auftriebskörpern in einem Bereich unterhalb der Wasseroberfläche und oberhalb des Schlammniveaus getragenen, vergleichsweise großflächigen Schöpfeinrichtung abzuleiten. Belüftungsluft wird vom Tankboden her in gleichmäßiger Verteilung feinblasig eingeleitet.

Die FR-A-2 454 428 beschreibt ein Verfahren und eine Vorrichtung ähnlich der FR-A-2 365 526 mit dem Unterschied einer kaskadenartigen Hintereinanderschaltung mehrerer Reaktoren für wenigstens zweimalige stufenweise Wiederholung des Klärvorganges. Dabei soll jede Stufe in einem separaten Reaktor vorzugsweise im Bestpunkt betrieben werden. Der Schmutzwasserzulauf kann wahlweise im ersten oder zweiten Behälter oder zugleich in beide Behälter durch Umschaltung aufgegeben werden. In einem Tank können durch Trennwände abgetrennt mehrere Reaktionsstufen angeordnet sein.

Der Erfindung liegt die Aufgabe zugrunde, ein verbessertes Verfahren und zugleich eine vereinfachte Anlage zu dessen Durchführung anzugeben, durch welche bei der biologischen Abwasserklärung mittels aerober Schlammstabilisierung unter Verwendung einer Kleinkläranlage der verfahrenstechnische und maschinentechnische sowie bauliche Aufwand bekannter Anlagen signifikant verringert und zugleich das Ergebnis der Klärung, d.h. die Reinheit des geklärten Abwassers, noch weiter verbessert ist.

Die Lösung der Aufgabe gelingt bei einem Verfahren der im Oberbegriff von Anspruch 1 gekennzeichneten Art mit der Erfindung, wobei das genannte Verfahren diskontinuierlich mit sich schubweise wiederholenden Arbeitszyklen durchgeführt wird, dadurch, daß jeder Arbeitszyklus die folgenden Arbeitsschritte umfaßt:
- In den am Ende eines Zyklus bis auf einen Restinhalt Schlamm von geklärtem Abwasser entleerten Reaktor wird bei geschlossenem Ablauf vorgereinigtes Abwasser eingeleitet;
- der Reaktor wird unter gleichzeitiger Einleitung von Luftsauerstoff mit einer seinem Arbeitsvolumen entsprechenden Abwassermenge gefüllt;
- die Einleitung des Abwassers in den Reaktor wird mittels gleichmäßiger Aufgabe über einen vergleichsweise langen Zeitraum entsprechend ca. 80 bis 90% der Gesamtdauer von einem Zyklus durchgeführt;
- während der Dauer des Füllvorgangs wird die Durchwirbelung des zugeführten frischen Abwassers mittels in Gegenrichtung zur Bewegung des Wassers in dieses eingeleiteter, energiereicher Luftstrahlen bewerkstelligt, wobei diese Aufwirbelung und Impfung mit dem im Reaktor vorhandenen Belebtschlamm stattfindet;
- nach Auffüllung des Reaktor-Arbeitsvolumens wird der Zulauf von Abwasser unterbrochen und nach einer vergleichsweise kurzen Umschaltpause mit dem Ablassen des geklärten Abwassers begonnen, wobei am Ende des Arbeitsschrittes zugleich auch das Ende eines Zyklus erreicht ist.

Mit Vorteil wird durch das erfindungsgemäße Verfahren der bei Kleinkläranlagen bisher übliche Aufwand an hydraulischen und maschinentechnischen Einrichtungen zur Trennung von Belebtschlamm und abgehendem, gereinigtem Abwasser vermieden. Denn der diskontinuierliche Betrieb ermöglicht in selbsttätiger Weise die Trennung von Belebtschlamm und Abwasser, ohne daß hierfür ein spezielles Trennbauwerk erforderlich wäre.

Dabei führt der kontinuierliche Zulauf im Verlaufe eines Arbeitszyklus zu einer die Entwicklung der Biologie fördernden gleichmäßigen Schlammbelastung.
Weil dem Kleinklärwerk nach der Erfindung ein Grobabscheiderechen und Sandfang vorgeschaltet werden muß, kann das während der vergleichsweise kurzen Zeitdauer der Entleerung anfallende frische Abwasser bei entsprechender Dimensionierung im Sand- und Fettfang gespeichert werden, so daß für den laufenden Anfall von Abwasser keine speziellen Auffangbecken oder Abwasser-Vorratsbehälter erforderlich sind.

Sehr vorteilhaft wird während der Dauer des Füllvorganges erstmals von der Maßnahme Gebrauch gemacht, daß das zugeführte frische Abwasser im Gegenstrom zur Einlaufrichtung mit Belebtschlamm durchwirbelt und geimpft wird. Die Grundströmung beim Füllen des Reaktors vom Einlauf in Richtung zum Auslauf würde auch den Belebtschlamm zum Auslauf hin konzentrieren. Um hiergegen eine gleichmäßige Verteilung des Schlammes zu erreichen, wird er von in Gegenrichtung zur Bewegung des Wassers in diesen eingeleiteten, energiereichen Luftstrahlen gegen den Einlauf zurücktransportiert. Dabei ist die Ausbildung der Luftströme so energiereich, daß sie diese Transportaufgabe übernehmen können. Ein Schlammrücktransport über mechanische Einrichtungen, wie dieser bei Kläranlagen allgemein üblich ist, würde einen erheblich größeren technischen Aufwand erfordern und damit die Kläranlage störanfällig machen.

Eine Ausgestaltung sieht vor, daß die Dauer eines Zyklus für die Einstellung von Zulaufgeschwindigkeit und Ablaufgeschwindigkeit auf ca. 24 Stunden ausgedehnt wird. Es hat sich überraschend herausgestellt, daß bei einem Zyklus von dieser Umlaufzeit optimale Klärergebnisse erzielt werden.

Eine Ausgestaltung sieht vor, daß vor dem Ablassen des geklärten Abwassers die Luft-Sauerstoffzufuhr abgestellt und der Belebtschlamm wenigstens teilweise unter die Flüssigkeitsoberfläche absinken kann und zum Sedimentieren gebracht wird. Diese Möglichkeit ergibt sich vorteilhaft durch den diskontinuierlichen Betrieb, wobei erfahrungsgemäß schon in wenigen Minuten nach Ruhigstellung der Flüssigkeit ohne Lufteintrag die flockenartigen, im Abwasser schwebenden Kolonien um einige Zentimeter unter die Oberfläche des geklärten Abwassers abgesunken sind. Dabei ist es dann möglich, daß das geklärte Abwasser nach einem erfindungswesentlichen Vorschlag unter Verwendung eines schwimmenden Schöpftrichters während der gesamten Entleerungsphase dicht unterhalb der Flüssigkeitsoberfläche abgezogen und in einen Vorfluter eingeleitet wird. Dieser schwimmende Schöpftrichter ist so eingerichtet, daß außerhalb der Belüftungsphase die im Rand eingearbeiteten Ablauföffnungen dicht unterhalb der Wasseroberfläche liegen. Das geklärte Wasser kann dann über den schwimmenden Schöpftrichter durch einen flexiblen Schlauch ablaufen und abgeleitet werden.

Der Wasserablauf über die Vielzahl kleiner Bohrungen dicht unterhalb der Wasseroberfläche hat gegenüber der konventionellen Technik einer statisch unbewegbaren Überlaufrinne folgende Vorteile:
- Weil das Wasser etwas unterhalb der Oberfläche entnommen wird, werden Schäume, die sich u.U. an der Oberfläche nach Abbrechen der Lufteinblasung ansammeln können, nicht mit in den Auslauf transportiert.
- Die Ablauföffnungen sind andererseits so dicht unterhalb der Abwasseroberfläche angeordnet, daß kein Sedimentschlamm mitgerissen werden kann.

Die zur Einleitung der Entleerungsphase des Reaktors erforderliche Schwimm-Höhenlage des Schöpftrichters wird selbsttätig durch das Anstellen oder Abstellen der Luft-Sauerstoffeintragung vorgenommen. Dies ist außer den bereits genannten Vorteilen der Entnahme auch deshalb fortschrittlich und vorteilhaft, weil auf diese Weise Regelmechanismen und deren Handhabung entfallen und somit auch keine störanfälligen Einrichtungsteile benötigt werden. Die hierfür zuständige mechanische Ausgestaltung des Schöpftrichters wird nachfolgend bei der Beschreibung der Anlage und ihrer Elemente erläutert werden.

Eine Ausgestaltung sieht vor, daß die Einleitung von Luft-Sauerstoff in den Reaktor, ausgehend vom tiefsten Bereich des Reaktors, unter Verwendung von horizontal gegen die Zulaufrichtung des einströmenden frischen Abwassers gerichteten, vergleichsweise druckvollen Luft-Sauerstoffstrahlen vorgenommen wird.

Eine Anlage zur biologischen Abwasserklärung mittels aerober Schlammstabilisierung, insbesondere unter Verwendung einer Kleinkläranlage zur Durchführung des Verfahrens nach der Erfindung, mit einem aus vorgefertigten Stahlteilen hergestellten Behälter, ist gekennzeichnet durch die Merkmale:
- Der Behälter weist einen länglichen Körper mit kreisförmigem oder elliptoidischem Querschnitt auf.
- der Raum des Behälters ist durch eine vom Zenith bis dicht oberhalb des Bodens senkrecht zur Behälterlängsachse verlaufende Wand in zwei hydraulisch kommunizierende Kammern unterteilt;
- die erste Kammer weist einen in einen Siebkorb einmündenden Abwasserzulauf und die zweite Kammer einen mit einem schwimmenden Schöpftrichter ausgebildeten Ablauf und stirnseitig einen in Bodennähe angeordneten Schlammabzug auf;
- am tiefsten Bereich des Behälters ist mittig eine Luft-Sauerstoffeintragungsleitung angeordnet, die zu beiden Seiten mit gegen den Zulauf gerichteten offenen Düsenrohren ausgebildet ist, wobei die Düsenrohre schräg nach unten - rückwärts gerichtet sind.

Weitere zweckmäßige Ausgestaltungen der Anlage sind entsprechend den Merkmalen der Unteransprüche vorgesehen.

Die Erfindung wird in schematischen Zeichnungen in einer bevorzugten Ausführungsform gezeigt, wobei aus den Zeichnungen weitere vorteilhafte Einzelheiten der Erfindung entnehmbar sind. Die Zeichnungen zeigen im einzelnen
- Figur 1: einen Reaktor im Längsschnitt;
- Figur 2: den ablaufseitigen Teil des Reaktors, ebenfalls im Längsschnitt und in vergrößerter Darstellung;
- Figur 3: den Reaktor im Querschnitt;
- Figur 4: eine Teilansicht der Lufteintragungsorgane im ausgeschnittenen Behälter, im Detail;
- Figur 5a: eine Ansicht der Düsenanordnung des Lufteintrittsorgans;
- Figur 5b: einen Schnitt durch die Lufteintragseinrichtung entsprechend der Schnittlinie A-B in Fig. 5a.
- Figuren 6a bis 6c: Die Kombination mehrerer Reaktoren.

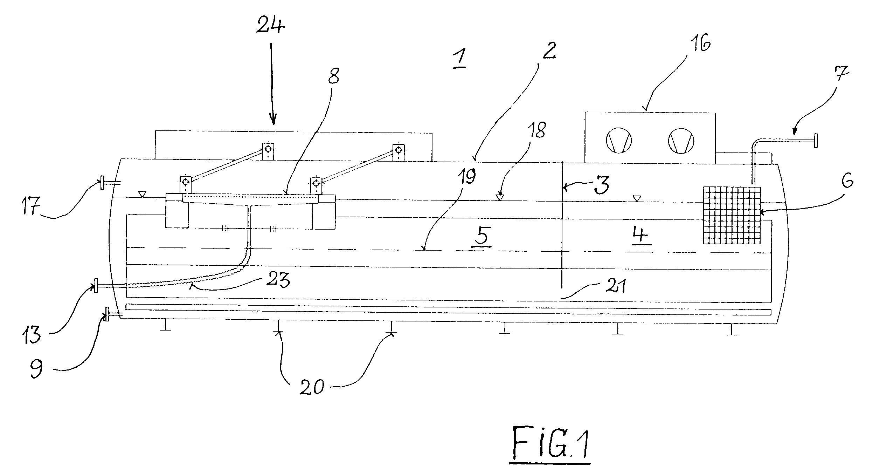

In der Fig. 1 ist ein Längsschnitt durch den Reaktionsraum, den Behälter 1 der Anlage mit schematischer Darstellung der wichtigsten Funktionselemente gezeigt. Aus der (nicht gezeigten) Vorreinigung mit Grobrechen, Sand- und Fettfang gelangt vorgereinigtes, mit Schmutzstoffen befrachtetes Abwasser durch den Abwasserzulauf 7 über den Siebkorb 6 in die erste Kammer 4 des Reaktors 1. Durch die Wand 3 wird der Behälter 1 in die beiden Kammern 4 und 5 unterteilt. Diese werden auch, entsprechend ihrer Funktion, als Einlaufteil 4 und Auslaufteil 5 bezeichnet. Eine Verbindungsöffnung 21 zwischen den beiden Behälterteilen befindet sich am Bodenbereich des Reaktors 1.

Mit der Aufteilung des Reaktors 1 in die beiden Kammern 4 und 5 wird ein annähernd zweistufiger Betrieb erreicht. Das Abwasser wird zunächst im Einlaufteil 4 mit Belebtschlamm durchmischt und gelangt dann unter langsamem Fluß in den Auslaufteil 5. Damit wird verhindert, daß frisch eingelaufenes Abwasser bei der Entleerungsphase des Reaktors 1 vergleichsweise ungeklärt zum Auslaufteil 5 gelangt. Da während des Entleerens keine Luft eingeblasen wird, findet auch keine Durchmischung statt. In der Entleerungsphase läuft praktisch nur das Wasser im Auslaufteil 5 aus.

Im Auslaufteil 5 ist der schwimmende Schöpftrichter, auch Schwimmrinne genannt, angeordnet. Sie wird über zwei parallel angeordnete an den Enden jeweils schwenkbar gelagerte Führungsgestänge 22 nach Art einer Parallelogrammführung stets in horizontaler Position gehalten. Von der Mitte des Schöpftrichters führt eine flexible Leitung 23 zum Ablaufstutzen 13. Der Reaktor steht auf Standfüßen 20. Auf seiner Oberseite befindet sich ein Kompressoraggregat 16 oberhalb des Einlaufteiles 4 sowie Wartungsöffnungen 24, die den Reaktor 1 von oben her zugänglich machen. An der Stirnseite des Auslaufteiles 5 befindet sich unten ein Schlammabzug 9 und oben ein Überlauf 17.

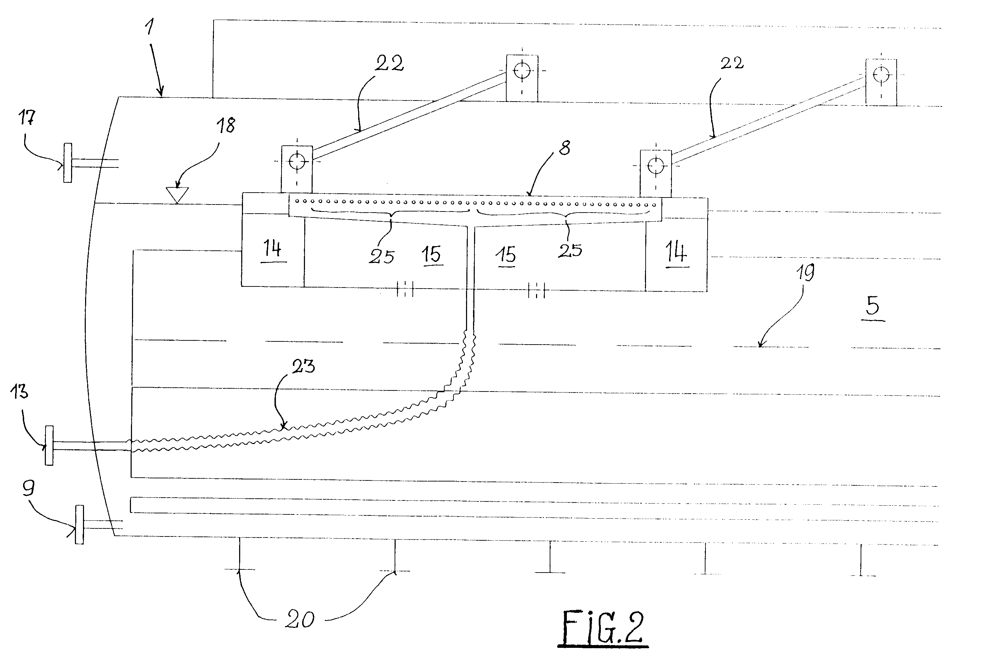

Im Auslaufteil 5 des Reaktors 1 befindet sich gemäß Darstellung in Fig. 2 die Anordnung der Schwimmrinne bzw. des Schöpftrichters 8, am Führungsgestänge 22 in horizontaler Lage jedoch höhenveränderbar gehalten. Die Enden der Schwimmrinne 8 sind als luftgefüllte Auftriebtanks 14 ausgebildet. Diese können sich nicht mit Wasser füllen. Damit ist sichergestellt, daß der Schöpftrichter 8 immer schwimmfähig bleibt. Im Abstand von ca. 50 mm unterhalb der Oberkante der Schwimmrinne sind ca. 10 mm große Ablauföffnungen 25 angeordnet. Bei abgestellter Belüftung außerhalb der Belüftungsphase befinden sich diese Öffnungen unterhalb der Wasseroberfläche 18 bzw. 19. Das Wasser kann dann durch die Ablauföffnungen 25 und die Leitung 23 zum Ablauf 13 hin ablaufen.

Für die Belebungsphase, in der kein Wasser ablaufen soll, sind zwei weitere, nach unten geöffnete Auftriebtanks 15 mit Luft gefüllt. Dadurch ragt die Schwimmrinne 8 so weit aus dem Wasser über die Oberfläche 18, daß die Ablauföffnungen 25 oberhalb der Wasseroberfläche 18 liegen. Dabei kann dann kein Abwasser aus dem Reaktor 1 ablaufen.

Bei Erreichen des vorgegebenen oberen Wasserpegels 18 wird die Entleerung eingeleitet. Um die Entleerungsphase herbeizuführen, wird die Eindüsung von Luft-Sauerstoff abgeschaltet. Dabei füllen sich die nach unten geöffneten Auftriebtanks langsam mit Wasser und der Schöpftrichter, bzw. Schwimmrinne 8 sinkt so weit ab, daß sich die Ablauföffnungen 25 unterhalb der Wasseroberfläche befinden.

Mit abnehmendem Reaktorinhalt sinkt die Schwimmrinne 8 zusammen mit der Wasseroberfläche ab. Dabei wird die Schwimmrinne 8 vom Führungsgestänge 22 geführt.

Bei Erreichen eines vorgegebenen unteren Wasserpegels 19 wird die Belüftung wieder zugeschaltet. Dabei verdrängt die Luft aus den nach unten geöffneten Auftriebtanks 15 Wasser, so daß die Schwimmrinne 8 wieder so weit über die Wasseroberfläche aufsteigt, daß die Ablauföffnungen oberhalb des Wasserpegels liegen und somit ein Wasserablauf nicht mehr möglich ist. Der Reaktor 1 wird nun wieder gefüllt.

Mit der neuartigen Bau- und Betriebsweise des schwimmenden Schöpftrichters bzw. der Schwimmrinne 8 wird erfindungsgemäß erreicht, daß die Füllungs- und Entleerungsphase ohne störanfällige bewegliche Ventile, Schieber oder ähnliche Organe ausschließlich unter Nutzung unterschiedlicher Auftriebskräfte selbsttätig abläuft.

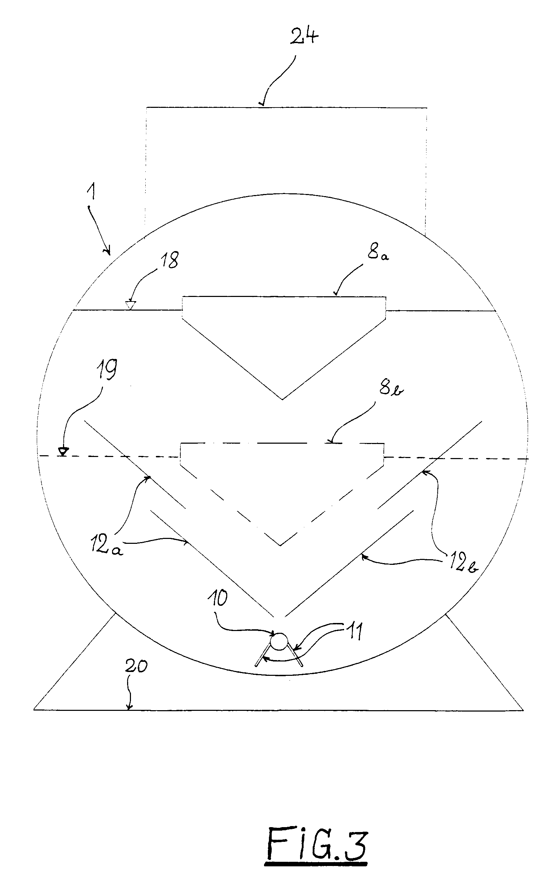

Figur 3 zeigt den Reaktor 1 im Querschnitt. Mit 8a ist die Position der Schwimmrinne bei gefülltem Reaktor entsprechend dem oberen Wasserpegel 18 bezeichnet. Punkt 8b zeigt die Schwimmrinne nach Abfluß des gereinigten Abwassers entsprechend dem unteren vorgegebenen Wasserpegel 19. Weiterhin sind die Leitbleche 12 rein schematisch angedeutet. Diese bewirken eine Vergleichmäßigung der Luftverteilung innerhalb des Reaktors. Die Darstellung zeigt weiterhin die Anordnung einer zentralen Luft-Sauerstoffzufuhrleitung 10 mit von dieser abgehenden Düsenrohren 11. Zur statischen Stabilisierung des Reaktors 1 sind Standfüße 20 angeordnet.

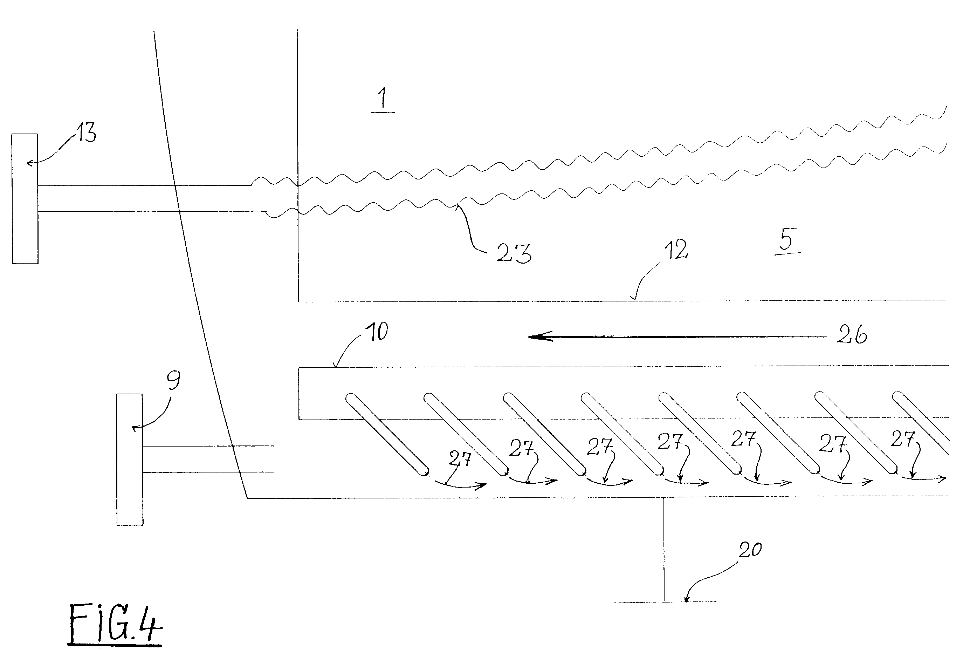

In der Fig. 4 sind rein schematisch die Anordnung des Lufteintragsystems und die Strömungsrichtung der aus den Düsenrohren 11 austretenden energiereichen Luftstrahlen 27 und die entgegengerichtete Einlaufströmung des Abwassers 26 dargestellt. Es ist erkennbar, daß sich die beiden Medien im Gegenstrom zueinander bewegen. Hierdurch wird eine intensive Durchwirbelung und Durchmischung des einlaufenden Wassers mit Belebtschlamm erreicht und verhindert, daß sich dieser im Auslaufteil 5 des Reaktors 1 konzentriert. Auch wird mit dieser Anordnung erreicht, daß Belebtschlamm vom Anfang der Einlaufphase an in den Einlaufteil 4 gelangt und dort bereits bei der Vorklärung einen intensiven aeroben Abbau organischer Schmutzteilchen des Abwassers in Gang setzt.

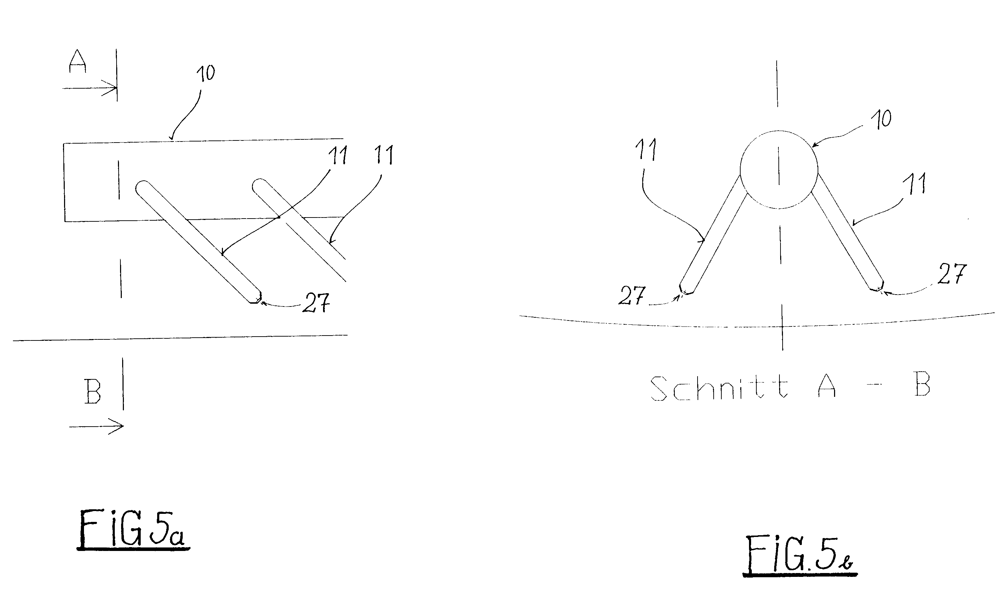

Fig. 5a zeigt in vergrößerter Darstellung die zentrale Luft-Sauerstoffleitung 10 mit Düsenrohren 11 in vergrößerter Darstellung. Die Düsenrohre 11 weisen an ihren freien Enden Düsenöffnungen 27 auf. Die Düsenöffnungen 27 haben einen Durchmesser von ca. 5 mm. Dadurch wird erreicht, daß bei entsprechendem Druck der Belebungsluft eine kräftige Transportströmung gemäß Fig. 4 erzeugt wird. Andererseits wird durch die Düsenöffnungen erreicht, daß in der Entleerungsphase des Reaktors 1, wenn keine Luft eingeblasen wird, die Düsenöffnungen nicht verstopfen können. Sie sind groß genug, um in das Belüftungsrohr eingedrungenen Schlamm bei Wiederaufnahme der Belebung von der Druckluft leicht wieder herauszudrücken. Durch die aus den Düsenöffnungen 27 austretenden gerichteten Luftstrahlen 27 wird Schlamm in Richtung zum Einlauf zurückgedrückt.

Aus der Zusammenschau der Fig. 5a und 5b ist die Stellung der Düsenrohre 11 im unteren Raum des Reaktors 1 erkennbar. Sie sind schräg nach unten-rückwärts gerichtet und bei ihrer Vielzahl und entsprechend dem Druck der eingetragenen Luft in der Lage, diese Luft über den gesamten Längen- und Breitenbereich des Reaktors 1 feinblasig zu verteilen.

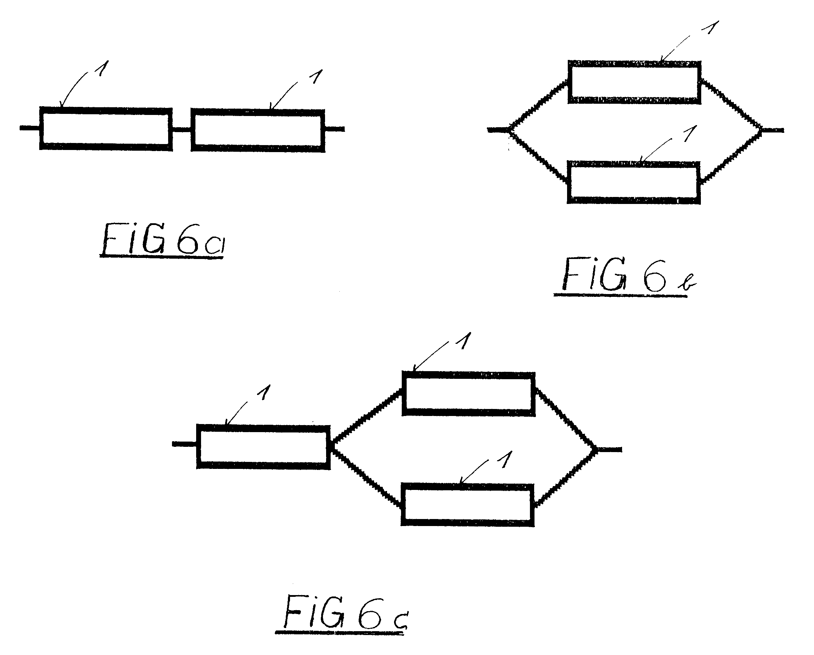

Mehrere der Kompaktanlagen können in beliebiger Form miteinander kombiniert werden: Zur Erhöhung der Reinigungsleistung werden Anlagen hintereinander geschaltet (Fig. 6a). Zur Erhöhung des Durchsatzes werden mehrere Anlagen parallel geschaltet (Fig. 6b). Die Kombination aus beiden Schaltungen ist ebenfalls möglich (Fig. 6c). Damit kann die Kompaktanlage flexibel den unterschiedlichsten Aufgabenstellungen angepaßt werden.

Das erfindungsgemäße Verfahren und die entsprechenden Anlagen lösen somit in idealer Weise die eingangs gestellte Aufgabe.

## Patentansprüche

1. Verfahren zur biologischen Abwasserklärung mittels aerober Schlammstabilisierung, insbesondere unter Verwendung einer Kleinkläranlage, wobei in einer üblichen, Grobstoffrechen, Sandfang und Fettabscheider aufweisenden Vorstufe vorgereinigtes Abwasser mit Frischschlamm geimpft und zur Belebung sowie Stabilisierung der aeroben Organismen in einem Belüftungsreaktor Luft-Sauerstoff in das zu klärende Abwasser eingeleitet wird, wobei das genannte Verfahren diskontinuierlich mit sich schubweise wiederholenden Arbeitszyklen durchgeführt wird,
**dadurch gekennzeichnet,**
daß jeder Arbeitszyklus die folgenden Arbeitsschritte umfaßt:
- in den am Ende eines Zyklus bis auf einen Restinhalt Schlamm von geklärtem Abwasser entleerten Reaktor wird bei geschlossenem Ablauf vorgereinigtes Abwasser eingeleitet;
- der Reaktor wird unter gleichzeitiger Einleitung von Luft-Sauerstoff mit einer seinem Arbeitsvolumen entsprechenden Abwassermenge gefüllt;
- die Einleitung des Abwassers in den Reaktor wird mittels gleichmäßiger Aufgabe über einen vergleichsweise langen Zeitraum entsprechend ca. 80 bis 90 % der Gesamtdauer von einem Zyklus durchgeführt;
- während der Dauer des Füllvorgangs wird die Durchwirbelung des zugeführten frischen Abwassers mittels in Gegenrichtung zur Bewegung des Wassers in dieses eingeleiteter, energiereicher Luftstrahlen bewerkstelligt, wobei diese Aufwirbelung und Impfung mit dem im Reaktor vorhandenen Belebtschlamm stattfindet;
- nach Auffüllung des Reaktor-Arbeitsvolumens wird der Zulauf von Abwasser unterbrochen und nach einer vergleichsweise kurzen Umschaltpause mit dem Ablassen des geklärten Abwassers begonnen, wobei am Ende des Arbeitsschrittes zugleich auch das Ende eines Zyklus erreicht ist.

2. Verfahren nach Anspruch 1,
**dadurch gekennzeichnet**,
daß die Dauer eines Zyklus über die Einstellung von Zulaufgeschwindigkeit und Ablaufgeschwindigkeit auf ca. 24 Stunden ausgedehnt wird.

3. Verfahren nach den Ansprüchen 1 und 2,
**dadurch gekennzeichnet**,
daß vor dem Ablassen des geklärten Abwassers die Luftsauerstoffzufuhr abgestellt und der Belebtschlamm wenigstens teilweise unter die Flüssigkeitsoberfläche absinken kann und zum Sedimentieren gebracht wird.

4. Verfahren nach einem oder mehreren
der Ansprüche 1 bis 3,
**dadurch gekennzeichnet**,
daß das geklärte Abwasser unter Verwendung eines schwimmenden Schöpftrichters während der gesamten Entleerungsphase dicht unterhalb der Füssigkeitsoberfläche abgezogen und in einen Vorfluter eingeleitet wird.

5. Verfahren nach einem oder mehreren
der Ansprüche 1 bis 4,
**dadurch gekennzeichnet**,
daß die Entleerung gleichmäßig über einen Zeitraum zwischen 10 und 20% einer Zyklusdauer vorgenommen wird.

6. Verfahren nach einem oder mehreren
der Ansprüche 1 bis 5,
**dadurch gekennzeichnet**,
daß die Einleitung von Luftsauerstoff in den Reaktor, ausgehend vom tiefsten Bereich des Reaktors, unter Verwendung von horizontal gegen die Zulaufrichtung des einströmenden frischen Abwassers gerichteten, vergleichsweise druckvollen Luft-Sauerstoffstrahlen, vorgenommen wird.

7. Anlage zur biologischen Abwasserklärung mittels aerober Schlammstabilisierung, insbesondere unter Verwendung einer Kleinkläranlage zur Durchführung des Verfahrens nach der Erfindung, mit einem aus vorgefertigten Stahlteilen hergestellten Behälter,
**gekennzeichnet durch**
die Merkmale:
- der Behälter (1) weist einen länglichen Körper (2) mit kreisförmigem oder elliptoidischem Querschnitt auf;
- der Raum des Behälters (1) ist durch eine vom Zenith bis dicht oberhalb des Bodens senkrecht zur Behälterlängsachse verlaufende Wand (3) in zwei hydraulisch kommunizierende Kammern (4, 5) unterteilt;
- die erste Kammer (4) weist einen in einen Siebkorb (6) einmündenden Abwasserzulauf (7) und die zweite Kammer (5) einen mit einem schwimmenden Schöpftrichter (8) ausgebildeten Ablauf (13) und stirnseitig einen in Bodennähe angeordneten Schlammabzug (9) auf;
- am tiefsten Bereich des Behälters (1) ist mittig eine Luft-Sauerstoffeintragsleitung (10) angeordnet, die zu beiden Seiten mit gegen den Zulauf (7) gerichteten offenen Düsenrohren (11) ausgebildet ist, wobei die Düsenrohre schräg nach unten-rückwärts gerichtet sind.

8. Anlage nach Anspruch 7,
**dadurch gekennzeichnet**,
daß im Behälter (1) von den seitlichen Bereichen schräg-abwärts nach innen-unten zu verlaufende und in Behälterlängsrichtung angeordnete, zur Vergleichmäßigung der Luft-Sauerstoffverteilung in der Trübe ausgebildete Leitbleche (12) eingesetzt sind.

9. Anlage nach den Ansprüchen 7 und 8,
**dadurch gekennzeichnet**,
daß die Leitbleche (12) sowohl in der ersten, als Vorklärstufe ausgebildeten Kammer (4), als auch in der zweiten, als Belebungsstufe ausgebildeten Kammer (5) angeordnet sind.

10. Anlage nach einem oder mehreren
der Ansprüche 7 bis 9,
**dadurch gekennzeichnet**,
daß die als Trennwand ausgebildete Wand (3) den Behälter (1) im Verhältnis 1 zu 2 zwischen der Einlauf-Kammer (4) und der Auslauf-Kammer (5) unterteilt.

11. Anlage nach einem oder mehreren
der Ansprüche 7 bis 10,
**dadurch gekennzeichnet**,
daß der schwimmende Schöpftrichter (8) zweistufig ausgebildete Auftriebs-Lufttanks (14, 15) aufweist, die so ausgelegt sind, daß sie während der Belüftungsphase selbsttätig eine höhere Schwimmposition einnehmen, als während der Entleerungsphase.

12. Anlage nach einem oder mehreren
der Ansprüche 7 bis 11,
**dadurch gekennzeichnet**,
daß mehrere der Behälter (1) zur Erhöhung der Reinigungsleistung hintereinander geschaltet sind oder zur Erhöhung des Durchsatzes parallel zueinander angeordnet sind oder kombiniert hintereinander geschaltet und parallel zueinander angeordnet sind.

## Claims

1. A process for the biological treatment of waste water by means of aerobic sludge stabilisation, in particular with the use of a small sewage treatment plant, whereby, in a conventional preliminary stage comprising a coarse screen, grit chamber and grease-removal tank, previously purified waste water is inoculated with fresh sludge and for the activation and stabilisation of the aerobic organisms in a aeration reactor atmospheric oxygen is introduced into the waste water to be treated, whereby the said process is performed discontinuously in batches with repetitive operating cycles,
**characterised in that** every operating cycle includes the following operating steps:
- with the outlet closed, pre-purified waste water is introduced into the reactor, which has been emptied of treated waste water at the end of a cycle until a residual content of sludge is obtained;
- the reactor is filled with an amount of waste water corresponding to its operating volume, with the simultaneous introduction of atmospheric oxygen;
- the introduction of waste water into the reactor is performed by means of a constant feed operation over a comparatively long period of time corresponding approx. to 80 to 90 % of the total duration of a cycle;
- throughout the filling operation the turbulence of the fresh waste water supplied is effected by means of energy-rich air streams introduced into said water in the opposite direction to the movement of the water, whereby this turbulence and inoculation occurs with the activated sludge present in the reactor;
- after filling up the operating volume of the reactor the admission of waste water is interrupted and after a comparatively short change-over pause the discharge of the treated waste water is commenced, whereby at the end of the operating step the end of a cycle is also simultaneously reached.

2. A process according to Claim 1,
**characterised in** **that** the duration of a cycle for the adjustment of the admission velocity and discharge velocity is extended to roughly 24 hours.

3. A process according to Claims 1 and 2,
**characterised** **in** **that** before the discharge of the treated waste water, the atmospheric oxygen supply is switched off and the activated sludge can sink at least partially beneath the fluid surface and is made to sediment.

4. A process according to one or more of Claims 1 to 3,
**characterised in that** the treated waste water is drawn off with the use of a floating scoop hopper throughout the entire emptying phase just beneath the fluid surface and is introduced into an outfall.

5. A process according to one or more of Claims 1 to 4,
**characterised in that** emptying is performed uniformly over a period of time of between 10 and 20 % of the duration of a cycle.

6. A process according to one or more of Claims 1 to 5,
**characterised in that** the introduction of atmospheric oxygen into the reactor, starting from the deepest region of the reactor, is performed with the use of comparatively highly pressurised streams of atmospheric oxygen directed horizontally against the inlet direction of the incoming fresh waste water.

7. A plant for the biological treatment of waste water by means of aerobic sludge stabilisation, in particular with the use of a small sewage treatment plant for performing the process according to the invention, having a container manufactured from prefabricated steel parts,
**characterised by** the features:
- the container (1) comprises an oblong body (2) having a circular or ellipsoidal cross section;
- the space of the container (1) is divided into two hydraulically communicating chambers (4, 5) by a wall (3) extending perpendicular to the longitudinal axis of the container from the zenith to just above the base;
- the first chamber (4) comprises a waste water inlet (7) opening into a wire basket (6) and the second chamber (5) comprises a discharge pipe (13) constructed with a floating scoop hopper (8) and on the front side a sludge outlet (9) disposed in the vicinity of the base;
- at the deepest region of the container (1) in the centre is disposed an atmospheric oxygen admission line (10), which on both sides is constructed with open nozzle pipes (11) directed towards the inlet (7), whereby the nozzle pipes are directed obliquely downwards and backwards.

8. A plant according to Claim 7,
**characterised in that** baffle plates (12), which are to extend obliquely downwards and inwardly and downwardly from the lateral regions and are disposed in the longitudinal direction of the container, and which are constructed to homogenise the atmospheric oxygen distribution in the sludge, are used in the container (1).

9. A plant according to Claims 7 and 8,
**characterised in** **that** the baffle plates (12) are disposed both in the first chamber (4) constructed as the preliminary treatment stage and also in the second chamber (5) constructed as the activation stage.

10. A plant according to one or more of Claims 7 to 9,
**characterised in** **that** the wall (3) constructed as a partition divides the container (1) in the ratio of 1 to 2 between the inlet chamber (4) and the outlet chamber (5).

11. A plant according to one or more of Claims 7 to 10,
**characterised in** **that** the floating trough (8) comprises buoyancy air tanks constructed in two stages (14, 15), which are designed so that during the aeration phase they automatically assume a higher floating position than during the emptying phase.

12. A plant according to one or more of Claims 1 to 11,
**characterised in** **that** several containers (1) are connected one behind another to increase the purifying efficiency or are disposed beside one another to increase the throughput or have a combined arrangement by beding connected behind one another and being disposed parallel to one another.

## Revendications

1. Procédé de clarification d'eaux usées par voie biologique par la stabilisation aérobie de boues, en particulier en utilisant une installation de clarification de petite taille, procédé dans lequel les eaux usées, pré-clarifiées dans un étage préliminaire habituel qui comprend un tamis pour les particules de grande taille, un dessableur et un piège à graisses, sont inoculées avec des boues fraîches et on introduit de l'oxygène atmosphérique dans les eaux usées à clarifier dans un réacteur d'aération afin d'activer et de stabiliser les organismes aérobies, le procédé en question étant mené de manière discontinue avec des cycles de travail qui se répètent par lots,
caractérisé en ce que chaque cycle de travail comprend les étapes suivantes :
- dans un réacteur vidé à la fin d'un cycle des eaux clarifiées, à l'exception d'un reste de boues, on introduit en circuit fermé des eaux usées pré-clarifiées;
- on remplit le réacteur avec une quantité d'eaux usées qui correspond à son volume de travail, en introduisant simultanément de l'oxygène atmosphérique;
- on effectue l'introduction des eaux usées dans le réacteur en débit régulier sur une durée comparablement longue qui correspond à environ 80 à 90% de la durée totale d'un cycle;
- pendant la durée du processus de remplissage, on effectue un brassage des eaux usées fraîchement introduites au moyen de jets d'air à haute énergie, qui sont injectés à contre-courant dans l'eau afin de mettre celle-ci en mouvement, ce brassage assurant une inoculation avec les boues actives présentes dans le réacteur;
- après remplissage du volume de travail du réacteur, on interrompt l'admission d'eaux usées et on commence l'évacuation des eaux clarifiées après une pause relativement courte, et à la fin de cette étape on atteint également simultanément la fin d'un cycle.

2. Procédé selon la revendication 1, caractérisé en ce que la durée d'un cycle est allongé à 24 heures en réglant la vitesse d'admission et la vitesse d'évacuation.

3. Procédé selon les revendications 1 et 2, caractérisé en ce qu'avant l'évacuation des eaux clarifiées, on cesse l'admission d'oxygène atmosphérique et on laisse s'enfoncer les boues actives au moins partiellement au-dessous de la surface du liquide et on les amène à sédimenter.

4. Procédé selon l'une ou plusieurs des revendications 1 à 3, caractérisé en ce que les eaux clarifiées sont soustraites en utilisant un entonnoir de puisage flottant à courte distance au-dessous de la surface du liquide pendant la totalité de la phase de vidange, et on les amène dans un déversoir préliminaire.

5. Procédé selon l'une ou plusieurs des revendications 1 à 4, caractérisé en ce que la vidange est effectuée régulièrement sur une durée comprise entre 10 et 20% de la durée d'un cycle.

6. Procédé selon l'une ou plusieurs des revendications 1 à 5, caractérisé en ce que l'introduction d'oxygène atmosphérique dans le réacteur est effectuée en partant de la région la plus profonde du réacteur, en utilisant des jets d'oxygène atmosphérique sous pression comparativement élevée, dirigés horizontalement à l'encontre de la direction d'admission des eaux usées fraîchement introduites.

7. Installation pour la clarification biologique d'eaux usées par stabilisation aérobie de boues, en particulier en utilisant une installation de clarification de petite taille pour mettre en oeuvre le procédé selon l'invention, comprenant un réservoir fabriqué en pièces d'acier préfabriquées, caractérisée par les éléments suivants :
- le réservoir (1) comporte un corps allongé (2) avec une section circulaire transversale circulaire ou ellipsoïdale,
- le volume du réservoir (1) est subdivisé en deux chambres (4, 5) en communication hydraulique au moyen d'une paroi (3) qui s'étend perpendiculairement à l'axe longitudinal du réservoir depuis le sommet jusqu'à faible distance au-dessus du fond;
- la première chambre (4) comporte une admission (7) pour les eaux usées qui débouche dans un tamis (6), et la seconde chambre (5) comportant une évacuation (13) réalisée au moyen d'un entonnoir de puisage flottant (8), et à l'extrémité une évacuation (9) pour les boues agencée au voisinage du fond;
- un conduit d'injection d'oxygène atmosphérique (10) est agencé au centre et dans la région la plus profonde du réservoir (1), conduit qui est équipé sur les deux côtés de buses (11) ouvertes dirigées en sens opposé à l'admission (7), les buses étant dirigées en oblique vers le bas et vers l'arrière.

8. Installation selon la revendication 7, caractérisée en ce que des baffles (12) sont mis en place dans le réservoir (1), ces baffles étant réalisés afin de régulariser la distribution d'oxygène atmosphérique dans les eaux boueuses, et étant agencés dans la direction longitudinale du réservoir et s'étendant depuis les régions latérales en oblique vers le bas et vers l'intérieur.

9. Installation selon les revendications 7 et 8, caractérisée en ce que les baffles (12) sont agencés aussi bien dans la première chambre (4) réalisée en tant qu'étage de pré-clarification, que dans la seconde chambre (5) réalisée en tant qu'étage d'activation.

10. Installation selon l'une ou plusieurs des revendications 7 à 9, caractérisée en ce que la paroi (3) réalisée en tant que paroi de séparation, subdivise le réservoir (1) dans le rapport de 1 à 2 entre la chambre d'entrée (4) et la chambre de sortie (5).

11. Installation selon l'une ou plusieurs des revendications 7 à 10, caractérisée en ce que l'entonnoir de puisage flottant (8) comprend des réservoirs de flottaison à air (14, 15) réalisés en deux étages, qui sont conçus de telle manière qu'ils occupent automatiquement pendant la phase d'aération une position flottante plus haute que pendant la phase de vidange.

12. Installation selon l'une ou plusieurs des revendications 7 à 11, caractérisée en ce que l'on branche plusieurs réservoirs (1) les uns derrière les autres afin d'augmenter l'efficacité de clarification, ou qu'on les agence parallèlement les uns aux autres pour augmenter le débit, ou encore qu'on les agence de façon combinée en série les uns derrière les autres et en parallèle les uns à côté des autres.
